# EUROPEAN PATENT SPECIFICATION

(11) **EP 4 513 854 B1**
(45) Date of publication and mention of the grant of the patent: **07.10.2026**
(21) Application number: 23193304.5
(22) Date of filing: 24.08.2023
(51) Int. Cl.: H04L 65/752, H04L 65/80, H04N 21/61, H04W 4/40, H04W 88/06, H04W 48/18, H04W 60/00

(54) **ADAPTIVE STREAMING FOR A MULTI-MNO-ENABLED USER EQUIPMENT**
ADAPTIVES STREAMING FÜR EIN MULTI-MNO-FÄHIGES BENUTZERGERÄT
DIFFUSION EN CONTINU ADAPTATIVE POUR UN ÉQUIPEMENT UTILISATEUR MULTI-MNO HABILITÉ

(43) Date of publication of application: 26.02.2025
(73) Proprietor: VOLKSWAGEN AG, 38440 Wolfsburg (DE)
(72) Inventor: Montero Bayo, Luca, 12049 Berlin (DE); Pfadler, Andreas, 13357 Berlin (DE)

(56) References cited:
- EP-A1- 4 290 360
- WO-A1-2022/206771
- US-A1- 2019 086 217
- US-A1- 2020 351 322
- ETSI SECRETARIAT: "LS from 5GAA on potential enhancements to MEC VIS API", vol. ISG MEC Multi-access Edge Computing, 31 March 2022 (2022-03-31), pages 1 - 33, XP014425939, Retrieved from the Internet <URL:ftp://docbox.etsi.org/ISG/MEC/05-Contributions/2022/MEC(22)000183_LS_from_5GAA_on_potential_enhancements_to_MEC_VIS_API.zip 5GAA_220317_gMEC4AUTO_Task3_TP Baseline-cl.docx> [retrieved on 20220331]

## Description

The present disclosure relates to a method for improving service reliability in critical applications requiring data streaming in mobile communication. Particularly, the method is applicable when there are more than one mobile network operators, MNOs, providing mobile communication service to a receiver (or otherwise to a terminal or more generically to a device).

Prior art defines an automated vehicle, also known as an AV, an autonomous vehicle, a self-driving car, a driverless car, a robo-car, or a robotic car, which is a vehicle that is capable of sensing its environment and moving safely with little or no human input. Frequently when such AVs operate autonomously or are tele-operated, data streaming is exchanged between an AV and a control center. Such data streaming may include any of audio, video, or an audio/video streaming. With respect to video streaming, adaptive protocols are now widespread among multiple day-to-day services. Those applications that rely on timely delivery of the best possible video experience make use of several data streams of video at different qualities, from which the client can choose based on preference, link capacity, or end-device. However, these different data streams are generally offered through the same path, routing-wise, and the capacity of the server is always assumed sufficient.

Further, automotive applications and mobile communications become more and more entangled, particularly due to the increasing interest in automatic driving that requires larger amounts of data when compared to conventional driving. These data amounts are provided partially by the vehicle itself (i.e., by sensors thereof) and partially via an air/radio interface. Via the air interface such as a vehicle to vehicle, V2V, communication or a vehicle to infrastructure, V2I, communication or a vehicle to everything, V2X, communication is carried out, the latter including communication with road side units, RSUs.

In such state-of-the-art systems efficient mobile communication is essential, which depending on a criticality of a particular operation must also meet certain requirements concerning quality of service, QoS.

In this context, for example a 3GPP 5G radio communication system can support demanding QoS requirements of many advanced V2X use cases and their corresponding applications. However, efficient driving, especially of automated vehicles, may be affected by sudden changes of the provided QoS. For that reason, a prediction of QoS changes and early notification of these predicted changes to vehicles recently have been enabled for example by the 3GPP 5G communication systems. This approach enables vehicles to avoid or mitigate effects of sudden QoS changes at application level. Naturally such predicted QoS influences possibilities of data streaming delivery.

A predicted QoS, pQoS, may for example be used to plan execution of a route or on a lower level to plan a specific maneuver of an AV. If, for example, the pQoS does not meet the requirements long enough, an application will not perform a given action. Typically, applications adapt to a pQoS time series, so that an improved or even optimal target distance planning can be achieved to fully utilize the most out of the predicted QoS feature.

It is already foreseen that AVs will need the support of multiple MNOs. To address the topic of multi MNO architectures, its API, and its challenges the CAMARA project has been started i.e. the "CAMARA: Telco Global API Alliance" aimed at Enabling Seamless Access to Telco Network Capabilities. CAMARA works in close collaboration with the GSMA Operator Platform Group to align API requirements and publish API definitions and APIs. Different MNOs have distinct networks and also use distinct pQoS models and learning methods to predict the future QoS for user devices such as AVs. Also, usually the pQoS levels differ at one location between different MNOs. Regardless of the specific perks for implementation, multi-MNO connectivity adds a layer of redundancy to the channel that can be used for increased reliance on the link. In this paradigm, a conventional approach is to balance the traffic among MNOs based on link quality, location or upon shortages of the currently active one.

In the execution of an application between a terminal and an application service, such as video streaming towards a remote operator for remote guidance, resolution of transmitted video will depend on channel conditions and the experienced QoS, which are at the same time are dependent on an MNO. Conventional adaptive streaming protocols make use of different streams of videos of different resolutions. The videos are divided into segments, and the client-server connection evaluates the quality of the connection to select a segment of the appropriate resolution considering such quality. In case of a sudden change of QoS (such as those in a fast-moving vehicular scenario), a 1-to-1 video streaming using one MNO may not have enough time to react to adapt the streaming resolution, which may result in loss of the video stream.

It is thus an object of the present disclosure to overcome or reduce at least some of the drawbacks of the prior art and to provide a method for improving service reliability in critical applications requiring data streaming in mobile communication. Particularly, when there are more than one mobile network operators, MNOs, providing mobile communication service to a receiver/terminal. The given task is solved by the subject-matter of the independent claim 1. Advantageous embodiments of the invention can further be gained from the dependent claims and/or optional features of the description.

Prior art concerning data streaming via multiple MNOs comprises:
- US 2020 / 0 351 322 A1 entitled "Low latency wireless communication system for teleoperated vehicle environments", and
- ETSI SECRETARIAT: "LS from 5GAA on potential enhancements to MEC VIS API", ETSI DRAFT vol. ISG MEC Multi-access Edge Computing 31 March 2022.

### Description of the invention

In the case for an adaptive streaming server which has access to multi-MNO connectivity to transmit different data streams, it is so far unclear how can the multiple connectivity streams be used to guarantee the best user experience and a reliable data stream. Further, it is undefined so far how can adaptive streaming be realized Multi-MNO scenarios where the connection with each MNO offers a different QoS. Therefore, the present disclosure addresses these problems as follows.

A first aspect of the invention refers to a method for adaptive streaming in a user equipment, UE, connected to more than one mobile network operator, MNO, the method comprising the steps of: entering a state requiring data streaming from the UE to a remote device, determining quality of service, QoS, for each of the MNOs, determining a first QoS for a first data rate of the data streaming, determining a second QoS for a second data rate of the data streaming wherein the second data rate is lower than the first data rate, selecting a first MNO that supports the first QoS, selecting at least one second MNO, different from the first MNO, that supports the second QoS, transmitting to the remote device the first data streaming, via the first MNO, at the first data rate, and transmitting to the remote device the second data streaming, via at least one second MNO, at the second data rate.

The benefit of the method according to the first aspect of the present disclosure that the reliability of data streaming and/or the flexibility to change the resolution are enhanced. Further, there is no MNOs switching when data delivery problems occur because the additional one or more MNOs are always delivering the second, backup data streaming. The first data streaming and the second data streaming may originate from the same initial data stream, for example a RAW data stream captured by a camera and/or a microphone. In other words, the first data streaming is a higher quality version of the second data streaming.

The step of entering a state requiring data streaming from the UE to a remote device (e.g. a server device at a control center) may be initiated by the UE, for example as a result of an accident of other unexpected scenario that might require assistance of a control center, or may be initiated by the control center, for example on a scheduled basis or for example for a routine check of an AV. Although, the terminal may be an AV the first aspect of the present disclosure is not limited thereto.

Optionally, such an AV may specifically plan driving routes so that there is always available one or more of the second MNOs in addition to the first MNO. Such planning allows to address critical movement scenarios, for example of very important persons or goods. In an exemplary scenario a terminal selects among the MNOs that can support the service with the required QoS (i.e. the pQoS profile can support the expected data rate) the one with better pQoS estimation to transmit the desired resolution. This MNO may be labelled as MNObest. Subsequently, the terminal selects at least one of the MNOs that have a pQoS lower than MNObest (ordered by quality) to transmit at least one lower resolution. Consequently, an AV using tele-operated driving in a safety-critical scenario can transmit a low quality video in the second best MNO-pQoS as a backup stream for safety reasons, while transmitting e.g. Full-HD with the best MNO-pQoS for better user experience at the remote operator's side.

The step of determining QoS for each of the MNOs may be location, network and time dependent and once any of these factors change (which may be determined by the UE) the terminal may re-execute the determining step and execute again the steps of the method that follow the determining step. For example when a location A changes to location B the first MNO may be maintained while the second MNO may change to a different MNO.

According to an option of the first aspect of the present invention the state requiring data streaming is any one of a tele-operated driving, a tele-operated assistance or a hazard-resolution state, which are typically initiated by the terminal (although the state may also be explicitly requested remotely from the control center). In such scenarios it is particularly important to support reliability of data streaming or the flexibility to change the data quality in the data streaming. Delivery of different data streams of the same source content (after processing) over different MNOs is beneficial to mitigate the switching lag required for adaptive streaming when only one delivery path is available.

According to an option according to any previous variants of the first aspect of the present invention the data streaming is any one of audio, video, or an audio/video streaming. In some tele-operation video data may be sufficient without audio, while in others audio/video data streams are necessary.

According to an option according to any previous variants of the first aspect of the present invention the different data rates of the data streaming result from any one or more of different resolutions, different quality levels, different encoding methods, different sampling rate. The reduced data rate is preferably selected so as not to significantly impair the control actions effected by the control center. According to one example the video resolution according to the first data rate may be 1440p while the video resolution according to the second data rate may be 720p i.e. four times less pixels. The resolution change may be combined with other data reduction techniques such as compression. For example, the compression according to the first data rate may be a lossless compression while the compression according to the second data rate may be lossy compression. In other examples, the first data rate stream may comprise audio and video while the second data rate stream may comprise video only. The sampling rate may concern audio sampling rate e.g. 44kHz and/or a video sampling rate expressed as frames per second, fps, such as 60fps or 30fps. Such data rate optimization techniques for the second data stream allow sufficient operability by a control center while being instantly available in case that the data streaming according to the first data rate fails. Moreover, the configuration of the different data rates for each MNO may be determined by the terminal alone (for example based on one or more pre-defined configurations) which is not claimed or the different data rates for each MNO are configured by the remote device explicitly by means of configuration transmitted to a UE in advance as in the claimed embodiment.

As claimed the QoS, for each of the MNOs, is a predictive QoS, pQoS. In such a case, a pQoS is a prediction and the corresponding pQoS model applies different approaches to arrive at predicted QoS. Such approaches may include Artificial Intelligence learning models to improve predictions of pQoS. Therefore, predicting the QoS requirements of a receiver/terminal in given circumstances before executing the corresponding services can potentially improve offering the most suitable services. Naturally, pQoS is also based on input parameters, such as environmental parameters of the receiver/terminal, which also may be differently treated by a pQoS model. Therefore, the variety of pQoS models is significant.

As claimed the pQoS determined for each of the MNOs are mapped to a common pQoS format. Having a common understanding of different pQoS indications available from different MNOs advantageously allows to efficiently configure an application of a receiver/terminal thereby often reducing a number of adaptations of the application operation due to a mismatch between a pQoS of different MNOs and/or a mismatch of different pQoSs and actual QoS.

According to an option according to any previous variants of the first aspect of the present invention, when there are more than one second MNOs the second data rate differs among the second MNOs. This feature allows to control the level of redundancy of the additional data streams that are generated and transmitted to the server. For very critical scenarios, the terminal may determine (according to one or more pre-defined configurations) or be configured (for example by the remote device) to apply two or more redundant data streams thereby utilizing for example three MNOs.

Correspondingly to the first aspect of the disclosure a second aspect of the present disclosure is a user equipment, UE, the UE comprising a processor configured to: enter a state requiring data streaming from the UE to a remote device, determine quality of service, QoS, for each of the MNOs, determine a first QoS for a first data rate of the data streaming, determine a second QoS for a second data rate of the data streaming wherein the second data rate is lower than the first data rate, select a first MNO that supports the first QoS, select at least one second MNO, different from the first MNO, that supports the second QoS, transmit to the remote device the first data streaming, via the first MNO, at the first data rate, and transmit to the remote device the second data streaming, via at least one second MNO, at the second data rate.

According to an option according to any previous variants of the second aspect of the present invention the UE is an automatic vehicle. In other variants the UE may be a part of the automatic vehicle or part of a vehicle in general.

According to an option according to any previous variants of the second aspect of the present invention the state requiring data streaming is any one of a tele-operated driving, a tele-operated assistance or a hazard-resolution state.

According to an option according to any previous variants of the second aspect of the present invention the data streaming is any one of audio, video, or an audio/video streaming and wherein the different data rates of the data streaming result from any one or more of different resolutions, different quality, different encoding methods, different sampling rate.

According to an option according to any previous variants of the second aspect of the present invention the QoS is a predictive QoS, pQoS, and the pQoS determined for each of the MNOs are mapped to a common pQoS format.

According to an option according to any previous variants of the second aspect of the present invention wherein when there are more than one second MNOs the second data rate differs among the second MNOs.

A third aspect of the present invention is a computer program comprising instructions which, when the program is executed by a computer, cause the computer to carry out all the steps of the method of the first aspect of the present disclosure according to any variants thereof presented above.

A fourth aspect of the present invention is a computer-readable storage medium comprising instructions which, when executed by a computer, cause the computer to carry out all the steps of the method of the first aspect of the present disclosure according to any variants thereof presented above.

Such computer programs are typically executed by utilizing the computing resources in a computing device e.g. a processor or a controller. Applications are stored on a non-transitory medium. An example of a non-transitory medium is a non-volatile memory, for example a flash memory while an example of a volatile memory is RAM. The computer instructions are typically executed by a processor. These memories are exemplary recording media for storing computer programs comprising computer-executable instructions performing all the steps of the computer-implemented method according the technical concept presented herein.

The various embodiments of the invention mentioned herein can be advantageously combined with each other, unless otherwise specified in the individual case.

Various objects and advantages of the present invention will become apparent to those skilled in the art from the following detailed description of embodiments, when read in light of the accompanying drawings.

### Description of the figures

Reference is now made to the following figures, in order to describe preferred embodiments of the invention in more detail.
- Figure 1: presents a high level diagram of a system according to the present invention,
- Figure 2: presents a diagram of a method according to the present invention, and
- Figure 3: presents a diagram of a configuration data container for a terminal.

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

As utilized herein, the term "example" means serving as a non-limiting example, instance, or illustration. As utilized herein, the terms "for example" and "e.g." introduce a list of one or more non-limiting examples, instances, or illustrations.

As used herein, the term "and/or" includes any and all combinations of one or more of the associated listed items. Further, the use of "may" when describing embodiments of the present invention refers to "one or more embodiments of the present invention." Further, in the following description of embodiments of the present invention, the terms of a singular form may include plural forms unless the presented context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention. As used herein, the term "and/or" includes any and all combinations of one or more of the associated listed items and expressions such as "at least one of" when preceding a list of elements, modify the entire list of elements.

Reference will now be made in detail to embodiments which are illustrated in the drawings. Effects and features of the exemplary embodiments will be described with reference to the accompanying drawings. Therein, like reference numerals denote like elements, and redundant descriptions are omitted. The present invention, however, may be embodied in various different forms, and should not be construed as being limited to only the illustrated embodiments herein.

Rather, these embodiments are provided solely as examples for fully conveying the aspects and features of the present invention to those skilled in the art.

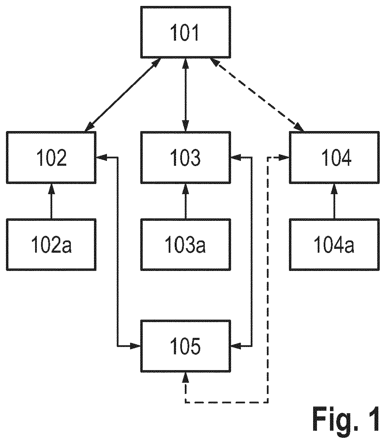

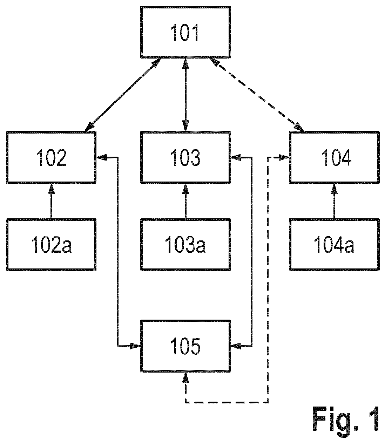

Figure 1 presents a high level diagram of a system according to the present invention. The system comprises a server 101 (or otherwise a remote device) and a terminal 105 that are in communication with each other via at least two MNOs 102, 103, 104. At least two MNO are present according to the present invention while any additional MNO(s) are optional. When the terminal 105 is to deliver data streaming to the server 101 it selects one MNO 101 as the primary MNO that delivers pQoS 1 higher than a pQoS 2 of an alternative, secondary MNO. Because the pQoS 1 is higher than the pQoS 2 the respective data rate 1 of the primary MNO is higher than that data rate 2 of the alternative, secondary MNO.

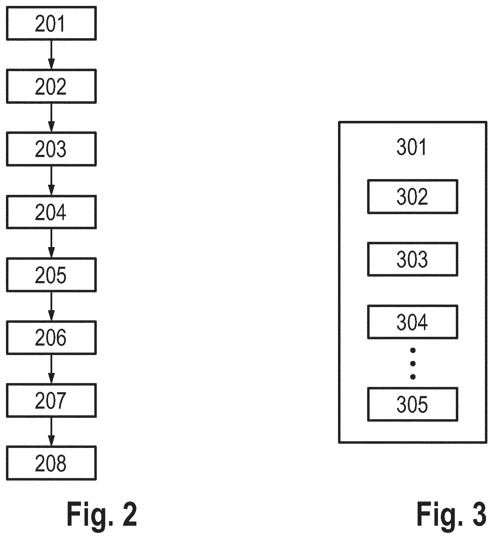

The configuration of the different data rates for each MNO may be determined by the terminal 105 alone (for example based on one or more pre-defined configurations) which is not claimed or the different data rates for each MNO may be configured by the remote device 101 explicitly by means of configuration transmitted to a UE in advance as claimed and as also described below with reference to figure 3.

The pre-determined configuration may be for example one of:
Configuration 1:
   Data Rate 1:
      video: 1080p
      audio: stereo 48kHz, 192 Kbps
   Data Rate 2:
      video: 720p
      audio: mono 44KHz, 64 Kbps
Configuration 2:
   Data Rate 1:
      video: 1080p, 60fps
      audio: stereo 48kHz, 192 Kbps
   Data Rate 2:
      video: 720p, 30fps
      audio: mono 44KHz, 64 Kbps
Configuration 3:
   Data Rate 1:
      video: 1440p
      audio: stereo 48kHz, 192 Kbps
   Data Rate 2:
      video: 1080p
      audio: mono 44KHz, 64 Kbps
   Data Rate 3:
      video: SD (Standard Definition)
      audio: none

In the third configuration there may be present more than three data rates that will be selected according to the configured number of MNOs. On the other hand when there are two MNOs and the configuration 3 is applied, then only the first two data rates will be used while omitting the remaining ones. In other cases, there may be a specific, dedicated configuration for a configured number of simultaneously used MNOs, for example 2, 3, 4 etc. This allows to configure for example MNO 2 with the data rate 2 differently when there are 2 MNOs and when there are 3 MNOs.

Optionally, the video configuration may explicitly identify a video codec such as MPEG-2, H.264, VC-1 and correspondingly the audio configuration may explicitly identify an audio codec such as, ACC, MP3, WMA.

Figure 2 presents a diagram of a method according to the present invention. At step 201 a terminal enters a state requiring data streaming from the UE (105) to a remote device. Subsequently, the terminal determines 202 quality of service, QoS, for each of the MNOs, and determines 203 a first QoS for a first data rate of the data streaming. After that, the terminal determines 204 a second QoS for a second data rate of the data streaming wherein the second data rate is lower than the first data rate. Based on the above the terminal selects 205 a first MNO that supports the first QoS, and selects 206 at least one second MNO, different from the first MNO, that supports the second QoS. Once set up, the terminal transmits 207 the first data streaming to the first MNO at the first data rate, and transmits 208 the second data streaming to the at least one second MNO at the second data rate.

Although normally the application managing the communication (either on the terminal or on the server) will be aware that the terminal transmits the first data streaming and the second data streaming because they are explicitly requested, a correspondence between the streams may be explicitly indicated by the terminal to the server. Such correspondence information may be embedded in the first data streaming and the second data streaming or be communicated separately. For example each data stream may have its identifier and a pair of such identifiers will map both streams to one another. Explicit identification that the first data streaming and the second data streaming correspond to one another may be beneficial in some scenarios and allows a server to quickly discard redundant data of the one or more data streams of lower quality if a corresponding data stream of higher quality is available.

It is clear that the invention also lies in a server 101 exchanging communication with the UE 105 as explained above with reference to figure 2.

Figure 3 presents a diagram of a configuration data container for a terminal. Such a configuration container may be called a multi MNO session config 301. The multi MNO session config indicates at least a number of MNOs 302 and may further configure each MNO expected data rates independently. For example, for the first MNO the configuration may be explicitly given as `data stream config 1' 303 and or the first MNO the configuration may be explicitly given as `data stream config 2' 304. Depending on the number of MNOs 302, additional `data stream config n' may be given for each of the MNOs in addition to the first and second MNOs. The configurations 1 to 3 given in relation to figure 1 above may be delivered to the terminal 105 from the server 101 using the configuration data container described with reference to figure 3.

### Reference signs

- 101: Server
- 102: MNO 1
- 103: MNO 2
- 104: MNO n
- 105: Terminal
- 102a: pQoS 1 and Data Rate 1 for MNO 1
- 103a: pQoS 2 and Data Rate 2 for MNO 2
- 104a: pQoS n and Data Rate n for MNO n

- 201: entering a state requiring data streaming from the UE to a remote device
- 202: determining quality of service, QoS, for each of the MNOs
- 203: determining a first QoS for a first data rate of the data streaming
- 204: determining a second QoS for a second data rate of the data streaming wherein the second data rate is lower than the first data rate
- 205: selecting a first MNO that supports the first QoS
- 206: selecting at least one second MNO, different from the first MNO, that supports the second QoS
- 207: transmitting the first data streaming to the first MNO at the first data rate
- 208: transmitting the second data streaming to the at least one second MNO at the second data rate

- 301: Multi MNO session config
- 302: no. of MNOs
- 303: Data stream config 1
- 304: Data stream config 2
- 305: Data stream config n

## Claims

1. A method for adaptive streaming in a user equipment, UE (105), connected to more than one mobile network operator, MNO (102 to 104), the method comprising the steps of:
entering (201) a state requiring data streaming from the UE (105) to a remote device,
determining (202) quality of service, QoS, for each of the MNOs (102 to 104), wherein the QoS is a predictive QoS, pQoS,
determining (203) a first QoS for a first data rate of the data streaming to form a first data streaming,
determining (204) a second QoS for a second data rate of the data streaming to form a second data streaming wherein the second data rate is lower than the first data rate,
selecting (205) a first MNO that supports the first QoS,
selecting (206) at least one second MNO, different from the first MNO, that supports the second QoS,
transmitting (207) to the remote device the first data streaming, via the first MNO, at the first data rate,
transmitting (208) to the remote device the second data streaming, via at least one second MNO, at the second data rate, the method being **characterized in that**
the first data rate and the second data rate are configured by the remote device, and
the pQoS determined for each of the MNOs are mapped to a common pQoS format.

2. The method according to claim 1, wherein the state requiring data streaming is any one of a tele-operated driving, a tele-operated assistance or a hazard-resolution state,
wherein the method further comprises a step of planning a driving route so that there is always available one or more of the second MNOs in addition to the first MNO.

3. The method according to any one of the preceding claims, wherein the data streaming is any one of audio, video, or an audio/video streaming.

4. The method according to any one of the preceding claims, wherein the different data rates of the data streaming result from any one or more of different resolutions, different quality levels, different encoding methods, different sampling rate.

5. The method according to any one of the preceding claims, wherein, when there are more than one second MNOs, the second data rate differs among the second MNOs.

6. A user equipment, UE (105), the UE comprising a processor configured to:
enter (201) a state requiring data streaming from the UE (105) to a remote device,
determine (202) quality of service, QoS, for each of the MNOs (102 to 104), wherein the QoS is a predictive QoS, pQoS,
determine (203) a first QoS for a first data rate of the data streaming to form a first data streaming,
determine (204) a second QoS for a second data rate of the data streaming to form a second data streaming wherein the second data rate is lower than the first data rate,
select (205) a first MNO that supports the first QoS,
select (206) at least one second MNO, different from the first MNO, that supports the second QoS,
transmit (207) to the remote device the first data streaming, via the first MNO, at the first data rate,
transmit (208) to the remote device the second data streaming, via at least one second MNO, at the second data rate, the UE being **characterized in that** the processor is further configured to receive, from the remote device, configuration so that the first data rate and the second data rate are configured by the remote device; and
the pQoS determined for each of the MNOs are mapped to a common pQoS format.

7. The UE of claim 6, wherein the UE is part of a vehicle.

8. The UE of any of claims 6 or 7, wherein the state requiring data streaming is any one of a tele-operated driving, a tele-operated assistance or a hazard-resolution state,
wherein the processor further configured to plan a driving route so that there is always available one or more of the second MNOs in addition to the first MNO.

9. The UE of any of claims 6 to 8, wherein the data streaming is any one of audio, video, or an audio/video streaming and wherein the different data rates of the data streaming result from any one or more of different resolutions, different quality levels, different encoding methods, different sampling rate.

10. The UE of any of claims 6 to 9, wherein, when there are more than one second MNOs, the second data rate differs among the second MNOs.

11. A computer program comprising instructions which, when the program is executed by a device, preferably the UE (105) according to any one of the claims 6 to 10, cause the device, preferably the UE (105) according to any one of the claims 6 to 10, to carry out all the steps of the method according to any of claims 1 to 5.

12. A computer-readable storage medium comprising instructions which, when executed by a device, preferably the UE (105) according to any one of the claims 6 to 10, cause the device, preferably the UE (105) according to any one of the claims 6 to 10, to carry out all the steps of the method according to any of claims 1 to 5.

## Patentansprüche

1. Verfahren zum adaptiven Streaming in einer Benutzereinrichtung, UE (105), die mit mehr als einem Mobilfunknetzbetreiber, MNO (102 bis 104), verbunden ist, das Verfahren umfassend die Schritte:
Eintreten (201) in einen Zustand, der ein Datenstreaming von der UE (105) an eine entfernte Vorrichtung erfordert,
Bestimmen (202) einer Dienstgüte, QoS, für jeden der MNOs (102 bis 104), wobei die QoS eine prädiktive QoS, pQoS, ist,
Bestimmen (203) einer ersten QoS für eine erste Datenrate des Datenstreamings, um ein erstes Datenstreaming auszubilden,
Bestimmen (204) einer zweiten QoS für eine zweite Datenrate des Datenstreamings, um ein zweites Datenstreaming auszubilden, wobei die zweite Datenrate niedriger als die erste Datenrate ist,
Auswählen (205) eines ersten MNO, der die erste QoS unterstützt,
Auswählen (206) mindestens eines zweiten MNO, der sich von dem ersten MNO unterscheidet, der die zweite QoS unterstützt,
Übertragen (207), an die entfernte Vorrichtung, des ersten Datenstreamings, über den ersten MNO, mit der ersten Datenrate,
Übertragen (208), an die entfernte Vorrichtung, des zweiten Datenstreamings, über mindestens einen zweiten MNO, mit der zweiten Datenrate,
wobei das Verfahren **dadurch gekennzeichnet ist, dass**
die erste Datenrate und die zweite Datenrate durch die entfernte Vorrichtung konfiguriert werden, und
die pQoS, die für jeden der MNOs bestimmt werden, auf ein gemeinsames pQoS-Format abgebildet werden.

2. Verfahren nach Anspruch 1, wobei der Zustand, der das Datenstreaming erfordert, ein beliebiger von einem ferngesteuerten Fahr-, einem ferngesteuerten Assistenz- oder einem Gefahrenbehebungszustand ist,
wobei das Verfahren ferner einen Schritt eines Planens einer Fahrtroute umfasst, sodass zusätzlich zu dem ersten MNO stets einer oder mehrere der zweiten MNOs verfügbar sind.

3. Verfahren nach einem der vorstehenden Ansprüche, wobei das Datenstreaming ein beliebiges von Audio-, Video- oder einem Audio/Video-Streaming ist.

4. Verfahren nach einem der vorstehenden Ansprüche, wobei die unterschiedlichen Datenraten des Datenstreamings aus einem oder mehreren beliebigen von unterschiedlichen Auflösungen, unterschiedlichen Gütestufen, unterschiedlichen Codierungsverfahren, unterschiedlicher Abtastrate resultieren.

5. Verfahren nach einem der vorstehenden Ansprüche, wobei, wenn es mehr als einen zweiten MNO gibt, sich die zweite Datenrate unter den zweiten MNOs unterscheidet.

6. Benutzereinrichtung, UE (105), die UE umfassend einen Prozessor, der konfiguriert ist zum:
Eintreten (201) in einen Zustand, der das Datenstreaming von der UE (105) an eine entfernte Vorrichtung erfordert,
Bestimmen (202) der Dienstgüte, QoS, für jeden der MNOs (102 bis 104), wobei die QoS eine prädiktive QoS, pQoS, ist,
Bestimmen (203) einer ersten QoS für eine erste Datenrate des Datenstreamings, um ein erstes Datenstreaming auszubilden,
Bestimmen (204) einer zweiten QoS für eine zweite Datenrate des Datenstreamings, um ein zweites Datenstreaming auszubilden, wobei die zweite Datenrate niedriger als die erste Datenrate ist,
Auswählen (205) eines ersten MNO, der die erste QoS unterstützt,
Auswählen (206) mindestens eines zweiten MNO, der sich von dem ersten MNO unterscheidet, der die zweite QoS unterstützt,
Übertragen (207), an die entfernte Vorrichtung, des ersten Datenstreamings, über den ersten MNO, mit der ersten Datenrate,
Übertragen (208), an die entfernte Vorrichtung, des zweiten Datenstreamings, über mindestens einen zweiten MNO, mit der zweiten Datenrate,
wobei die UE **dadurch gekennzeichnet ist, dass**
der Prozessor ferner konfiguriert ist, um, von der entfernten Vorrichtung, eine Konfiguration zu empfangen, sodass die erste Datenrate und die zweite Datenrate durch die entfernte Vorrichtung konfiguriert werden; und
die pQoS, die für jeden der MNOs bestimmt werden, auf ein gemeinsames pQoS-Format abgebildet werden.

7. UE nach Anspruch 6, wobei die UE Teil eines Fahrzeugs ist.

8. UE nach einem der Ansprüche 6 oder 7, wobei der Zustand, der Datenstreaming erfordert, ein beliebiger von einem ferngesteuerten Fahr-, einem ferngesteuerten Assistenz- oder einem Gefahrenbehebungszustand ist,
wobei der Prozessor ferner konfiguriert ist, um eine Fahrtroute zu planen, sodass zusätzlich zu dem ersten MNO stets einer oder mehrere der zweiten MNOs verfügbar sind.

9. UE nach einem der Ansprüche 6 bis 8, wobei das Datenstreaming ein beliebiges von Audio-, Video- oder einem Audio/Video-Streaming ist und wobei die unterschiedlichen Datenraten des Datenstreamings aus einem oder mehreren beliebigen von unterschiedlichen Auflösungen, unterschiedlichen Gütestufen, unterschiedlichen Codierungsverfahren, unterschiedlicher Abtastrate resultieren.

10. UE nach einem der Ansprüche 6 bis 9, wobei, wenn es mehr als einen zweiten MNO gibt, sich die zweite Datenrate unter den zweiten MNOs unterscheidet.

11. Computerprogramm, umfassend Anweisungen, die, wenn das Programm durch eine Vorrichtung, vorzugsweise die UE (105) nach einem der Ansprüche 6 bis 10, ausgeführt wird, die Vorrichtung, vorzugsweise die UE (105) nach einem der Ansprüche 6 bis 10, veranlassen, alle Schritte des Verfahrens nach einem der Ansprüche 1 bis 5 durchzuführen.

12. Computerlesbares Speichermedium, umfassend Anweisungen, die, wenn sie durch eine Vorrichtung, vorzugsweise die UE (105) nach einem der Ansprüche 6 bis 10, ausgeführt werden, die Vorrichtung, vorzugsweise die UE (105) nach einem der Ansprüche 6 bis 10, veranlassen, alle Schritte des Verfahrens nach einem der Ansprüche 1 bis 5 durchzuführen.

## Revendications

1. Procédé destiné à une diffusion en flux adaptative dans un équipement utilisateur, UE (105), connecté à plus d'un opérateur de réseau mobile, MNO (102 à 104), le procédé comprenant les étapes consistant à :
entrer (201) dans un état exigeant une diffusion en flux de données à partir de l'UE (105) vers un dispositif distant,
déterminer (202) une qualité de service, QoS, pour chacun des MNO (102 à 104), dans lequel la QoS est une QoS prévisionnelle, pQoS,
déterminer (203) une première QoS pour un premier débit de données de la diffusion en flux de données pour former une première diffusion en flux de données,
déterminer (204) une seconde QoS pour un second débit de données de la diffusion en flux de données pour former une seconde diffusion en flux de données dans lequel le second débit de données est inférieur au premier débit de données,
sélectionner (205) un premier MNO qui supporte la première QoS,
sélectionner (206) au moins un second MNO, différent du premier MNO, qui supporte la seconde QoS,
transmettre (207) au dispositif distant la première diffusion en flux de données, par l'intermédiaire du premier MNO, au premier débit de données,
transmettre (208) au dispositif distant la seconde diffusion en flux de données, par l'intermédiaire d'au moins un second MNO, au second débit de données,
le procédé étant **caractérisé en ce que**
le premier débit de données et le second débit de données sont configurés par le dispositif distant, et
les pQoS déterminées pour chacun des MNO sont mappées à un format commun de pQoS.

2. Procédé selon la revendication 1, dans lequel l'état exigeant une diffusion en flux de données est l'un quelconque parmi une conduite téléopérée, une assistance téléopérée ou un état de résolution de danger,
dans lequel le procédé comprend en outre une étape de planification d'un trajet de conduite de sorte qu'il y a toujours un ou plusieurs des seconds MNO disponibles en plus du premier MNO.

3. Procédé selon l'une quelconque des revendications précédentes, dans lequel la diffusion en flux de données est l'une quelconque parmi une diffusion en flux audio, vidéo ou audio/vidéo.

4. Procédé selon l'une quelconque des revendications précédentes, dans lequel les différents débits de données de la diffusion en flux de données résultent de l'un quelconque ou plusieurs quelconques parmi des résolutions différentes, des niveaux de qualité différents, des procédés d'encodage différents, un taux d'échantillonnage différent.

5. Procédé selon l'une quelconque des revendications précédentes, dans lequel, lorsqu'il y a plus d'un second MNO, le second débit de données diffère parmi les seconds MNO.

6. Équipement utilisateur, UE (105), l'UE comprenant un processeur configuré pour :
entrer (201) dans un état exigeant une diffusion en flux de données à partir de l'UE (105) vers un dispositif distant,
déterminer (202) une qualité de service, QoS, pour chacun des MNO (102 à 104), dans lequel la QoS est une QoS prévisionnelle, pQoS,
déterminer (203) une première QoS pour un premier débit de données de la diffusion en flux de données pour former une première diffusion en flux de données,
déterminer (204) une seconde QoS pour un second débit de données de la diffusion en flux de données pour former une seconde diffusion en flux de données dans lequel le second débit de données est inférieur au premier débit de données,
sélectionner (205) un premier MNO qui supporte la première QoS,
sélectionner (206) au moins un second MNO, différent du premier MNO, qui supporte la seconde QoS,
transmettre (207) au dispositif distant la première diffusion en flux de données, par l'intermédiaire du premier MNO, au premier débit de données,
transmettre (208) au dispositif distant la seconde diffusion en flux de données, par l'intermédiaire d'au moins un second MNO, au second débit de données,
l'UE étant **caractérisé en ce que**
le processeur est configuré en outre pour recevoir, en provenance du dispositif distant, une configuration de sorte que le premier débit de données et le second débit de données sont configurés par le dispositif distant ; et
les pQoS déterminées pour chacun des MNO sont mappées à un format commun de pQoS.

7. UE selon la revendication 6, dans lequel l'UE fait partie d'un véhicule.

8. UE selon l'une quelconque des revendications 6 ou 7, dans lequel l'état exigeant une diffusion en flux de données est l'un quelconque parmi une conduite téléopérée, une assistance téléopérée ou un état de résolution de danger,
dans lequel le processeur est configuré en outre pour planifier un trajet de conduite de sorte qu'il y a toujours un ou plusieurs des seconds MNO disponibles en plus du premier MNO.

9. UE selon l'une quelconque des revendications 6 à 8, dans lequel la diffusion en flux de données est l'une quelconque parmi une diffusion en flux audio, vidéo, ou audio/vidéo et dans lequel les différents débits de données de la diffusion en flux de données résultent de l'un quelconque ou plusieurs quelconques parmi des résolutions différentes, des niveaux de qualité différents, des procédés d'encodage différents, un taux d'échantillonnage différent.

10. UE selon l'une quelconque des revendications 6 à 9, dans lequel, lorsqu'il y a plus d'un second MNO, le second débit de données diffère parmi les seconds MNO.

11. Programme informatique comprenant des instructions qui, lorsque le programme est exécuté par un dispositif, de préférence l'UE (105) selon l'une quelconque des revendications 6 à 10, amènent le dispositif, de préférence l'UE (105) selon l'une quelconque des revendications 6 à 10, à effectuer toutes les étapes du procédé selon l'une quelconque des revendications 1 à 5.

12. Support de stockage lisible par ordinateur comprenant des instructions qui, lorsqu'elles sont exécutées par un dispositif, de préférence l'UE (105) selon l'une quelconque des revendications 6 à 10, amènent le dispositif, de préférence l'UE (105) selon l'une quelconque des revendications 6 à 10, à effectuer toutes les étapes du procédé selon l'une quelconque des revendications 1 à 5.
